# EUROPEAN PATENT APPLICATION

(11) **EP 1 215 374 A1**
(43) Date of publication of application: **19.06.2002**
(21) Application number: 01129622.5
(22) Date of filing: 12.12.2001
(51) Int. Cl.: F01N 3/28

(54) **Emission control catalyst assembly for an engine of a motor vehicle**

(30) Priority: 14.12.2000 US 735866
(71) Applicant: DETROIT DIESEL CORPORATION, Detroit, MI 48239-4001 (US)
(72) Inventor: Hoelzer, James C., Livonia, Michigan 48152 (US)
(74) Representative: Grünecker, Kinkeldey, Stockmair & Schwanhäusser Anwaltssozietät

(57) **Abstract**

An emission control catalyst assembly (10) for an engine includes a container (12) housing a catalyst substrate (34) that substantially fills an enlarged diameter section (18) of the container. The catalyst substrate has end faces (36 and 38) that axially intrude into interiors (40 and 42) of tapered sections (20 and 22) of container (12) to allow a more efficient shorter container that houses more catalyst material.

## Description

### TECHNICAL FIELD

The field of this invention relates to flow through device, a catalytic for engines.

### BACKGROUND OF THE DISCLOSURE

The incorporation of a catalyst in an exhaust system of engines is becoming universal to reduce polluting emissions. The catalysts are typically placed in the exhaust flow close to the engine such that the exhaust gasses have sufficient heat to activate the catalyst. The exhaust gasses then flow out to a muffler.

Typically, the catalyst is housed in a metallic container that is a substantially cylindrical or oval shaped container with an inlet and outlet at two opposite axial ends. The catalyst substrate material is housed in the container and has two opposite end faces. The substrate diameter is typically significantly larger than the exhaust pipe diameter to provide a sufficient substrate flow area to reduce back pressure on the engine. Typically, the container has a tapered section between the inlet and the wider cross-sectional area of a central section of the container as well as between the outlet and central section of the container. The tapered sections allow for a reasonably acceptable flow development upstream of the flat front face of the substrate and out from the rear face of the substrate to provide reasonable flow through all parts of the catalyst. The addition of a catalyst assembly in the exhaust flow may reduce the needed space for a muffler, but there still is a net increase of required space for the exhaust system with the addition of a catalyst. Space is a critical commodity in all vehicles due to streamlining considerations and weight or fuel economy considerations.

What is needed is a smaller more efficient assembly for an emission control catalyst.

### SUMMARY OF THE DISCLOSURE

In accordance with one aspect of the invention, a catalyst assembly for emission control of an engine includes a longitudinally extending container having an inlet and outlet at opposite ends thereof. The container has an enlarged diameter central section and a tapered section interposed between the central section and at least one of the inlet and outlet. A catalyst substrate is mounted in the central section and has two opposite end faces. At least one of the two opposite faces is contoured to extend axially into a respective interior defined by a respective tapered section.

Preferably the container has a respective tapered section interposed between the central section and both the inlet and outlet. Preferably, both of the two opposite faces of the catalyst substrate are contoured to extend axially into their respective interiors defined by the respective tapered sections.

It is desirable that the respective tapered sections and the opposite ends of the catalyst substrate form two axially oppositely disposed gaps that are tapered toward the radial periphery of the catalyst substrate.

In one embodiment, the container has an outer contour with a circular cross-section. The substrate substantially fills the central section and has its end faces each having a radially central flat disc section and a tapered frustoconical section that extends into the interior of a respective tapered section.

The contour of the end face is preferably shaped with the use of computational fluid dynamics to minimize the pressure differential at each point of the end face.

### BRIEF DESCRIPTION OF THE DRAWINGS

Reference now is made to the accompanying drawings in which:
Figure 1 is a perspective view of a catalyst container in accordance with one embodiment of the invention;
Figure 2 is a side segmented and schematic view of a catalyst assembly found in the prior art;
Figure 2a is a perspective view of a conventional catalyst brick shown in figure 2;
Figure 3 is a view similar to figure 2 illustrating an embodiment of the invention;
Figure 4 is a view similar to figure 3 illustrating an alternate embodiment of the invention;
Figure 5 is plan view of a cylindrical container housing the catalyst brick in accordance with the invention; and
Figure 6 is a plan view of an oval container housing the catalyst brick in accordance with the invention.

### DETAILED DESCRIPTION OF THE PREFERRED EMBODIMENT

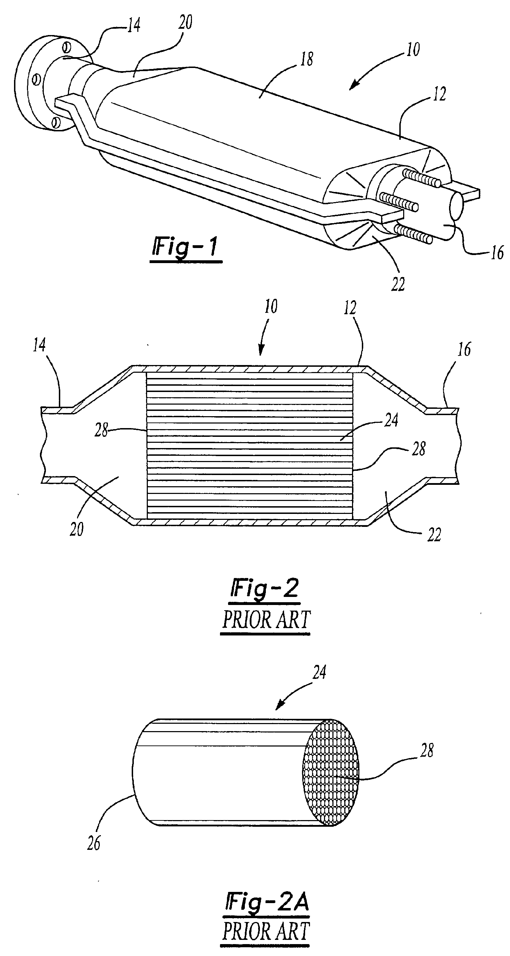

Referring now to figure 1, a catalyst assembly 10 has a container 12 with an inlet 14 and outlet 16 in communication with an enlarged diameter central section 18. Two tapered sections 20 and 22 extend from the central section to a respective inlet 14 and outlet 16.

A conventional catalyst brick 24 as shown in figures 2 and 2a is housed in the central section 18 and has flat inlet face 26 and flat outlet face 28. The catalyst material may be wash coated onto the substrate or may be a particulate trapped in the substrate. Some of these bricks have a wall flow pattern which forces the exhaust gasses to pass through at least one wall of the channel within the brick. These catalyst bricks are commercially available from a plurality of commercial sources.

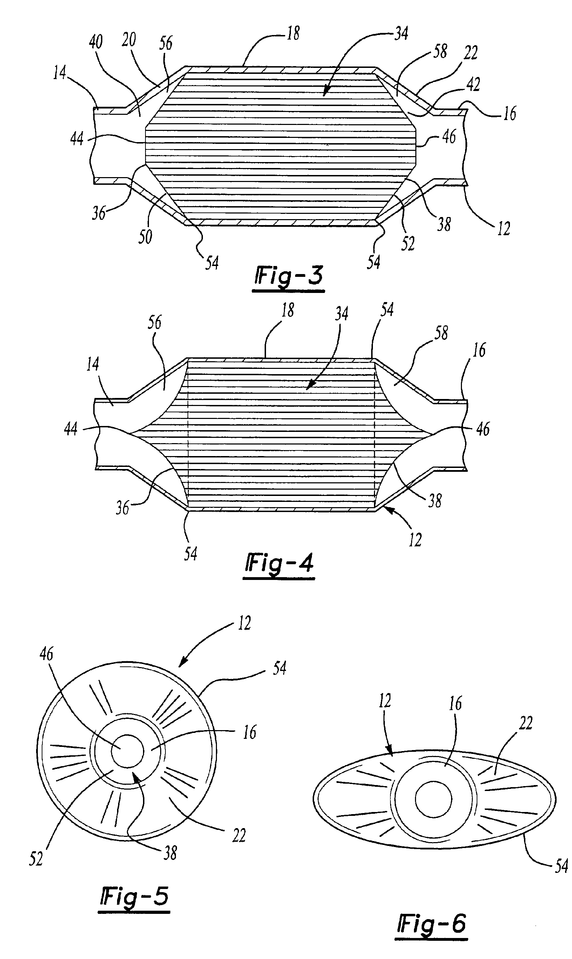

As shown in figure 3, the catalyst container 18 houses a catalyst brick 34 in accordance with the invention. The brick 34 substantially fills the central section 18. The catalyst brick 34 has end faces 36 and 38 which extend into interiors 40 and 42 within respective tapered sections 20 and 22 beyond the axial confines of central section 18.

As shown in figure 5, the container may have a circular cross section. The outer periphery 54 of the brick 34 may also have a circular cross section to substantially fill the central section 18. The end faces 36 and 38 may be defined by a radially central disc section 44 and 46 and a tapered or frustocontical section 50 and 52 that extend to periphery 54. The faces 36 and 38 define with tapered sections 20 and 22 two tapered gaps 56 and 58 that are tapered toward periphery 54.

The total volume of brick 34 should be approximately the same as conventional brick 24, shown in figure 2, in order to have similar capacities. As one can readily see from the drawings, the same capacity catalyst assembly is housed in a smaller container 12 of substantially shorter length as compared to the container shown in figure 2. This is by more efficient use of the tapered section 20 and 22 to be used as storage for some of the catalyst as well as a transitional section leading to the enlarged central section 18.

Another embodiment is illustrated in figure 4 where the radially central section 44 is significantly downsized from a disc to, for all practical purposes, a point. The sections 36 and 38 are flared to periphery section 54. The defined gaps 56 and 58 retain a tapered shape toward periphery 54. The outer shape of the container as shown in figure 6 may have an oval appearance. The brick 34 may also have a corresponding oval cross sectional shape.

The specific angle and contour of the end faces 36 and 36 may be contoured and positioned in accordance with what computational fluid dynamic analysis calculates will provide a low pressure drop and uniform flow through the catalyst brick. These angles and positions may change depending on the initial shape of the container 12, the anticipated flow rates of the exhaust, and the restrictions within the catalyst brick.

Inthis fashion, a more efficient catalyst assembly is achieved that does not lower any capacity, but can be housed in a shorter and smaller container.

Variations and modifications are possible without departing from the scope and spirit of the present invention as defined by the appended claims.

## Claims

1. A catalyst assembly for emission control of an engine, said catalyst assembly **characterized by**:
a longitudinally extending container having an inlet and outlet at opposite ends thereof;
said container having a enlarged diameter central section and a tapered section interposed between the central section and at least one of the inlet and outlet;
a catalyst substrate mounted in the central section and having two opposite end faces;
at least one of said two opposite faces being contoured to extend axially into a respective interior defined by said tapered section.

2. A catalyst assembly as defined in claim 1 further **characterized by**:
said container having a respective tapered section interposed between the central section and both the inlet and outlet;
both of said two opposite faces of said catalyst substrate being contoured to extend axially into the interior defined by said respective tapered section.

3. A catalyst assembly as defined in claim 2 further **characterized by**:
said respective tapered section and said opposite ends of said catalyst substrate form two axially oppositely disposed gaps that are tapered toward an outer radial periphery of the catalyst substrate.

4. A catalyst assembly as defined in claim 3 further **characterized by**:
said container having a circular outer contour;
said substrate substantially fills said central section;
said end faces each having a tapered frustoconical section that extends into the interior of said tapered section, and a radially central flat disc section.

5. A catalyst assembly as defined in claim 1 further **characterized by**:
said contour of said end face being shaped with the use of computational fluid dynamics to minimize the pressure differential at each point of said end face.
